# EUROPÄISCHE PATENTSCHRIFT

(11) **EP 1 399 308 B1**
(45) Veröffentlichungstag und Bekanntmachung des Hinweises auf die Patenterteilung: **15.12.2004**
(21) Anmeldenummer: 02758277.4
(22) Anmeldetag: 26.06.2002
(51) Int. Cl.: B29D 30/06, B29C 33/42

(54) **FORMSEGMENT EINES VULKANISIERFORMWERKZEUGS FÜR LUFTREIFEN**
MOULD SEGMENT FOR A VULCANISATION MOULDING TOOL FOR PNEUMATIC TYRES
SEGMENT DE MOULE D'UN OUTIL DE MOULAGE DE VULCANISATION POUR PNEUMATIQUES

(30) Priorität: 28.06.2001 DE 10131130
(43) Veröffentlichungstag der Anmeldung: 24.03.2004
(73) Patentinhaber: Dahmen GmbH, 52477 Alsdorf (DE)
(72) Erfinder: PINKAWA, Hartmut, 31535 Neustadt (DE); WILDHAGEN, Dirk, 30163 Hannover (DE); POKOJ, Marian, 30827 Garbsen (DE); WIST, Stefan, 30926 Seelze (DE); DAHMEN, Bernd, 52134 Herzogenrath (DE)
(74) Vertreter: Berkenbrink, Kai-Oliver
(86) Internationale Anmeldenummer: PCT/EP2002/007032
(87) Internationale Veröffentlichungsnummer: WO 2003/002334

(56) Entgegenhaltungen:
- DE-B- 1 169 651
- DE-C- 19 749 565
- DE-C- 19 913 436
- US-A- 2 224 337
- US-A- 3 553 790
- DATABASE WPI Week 9849 Derwent Publications Ltd., London, GB; AN 98-576383 XP002211644 -& JP 10 258429 A (SUMITOMO), 29. September 1998 (1998-09-29)

## Beschreibung

Die Erfindung betrifft ein Formsegment einer Vulkanisationsform für Fahrzeugreifen.

Fahrzeugreifen bestehen üblicherweise aus einem vulkanisierbaren Material. Um die Lauffläche eines Fahrzeugreifens mit einem Profil zu versehen, werden sogenannte Vulkanisationsformen verwendet. Diese bestehen aus mehreren Segmenten, den sogenannten Formsegmenten, auch Profilsegmente genannt. Die Formsegmente weisen eine Formfläche zur Profilierung des Reifens auf. In ihrer zur Vulkanisationsform arrangierten Anordnung kommen die Formflächen der Formsegmente derart nebeneinander zu liegen, dass sie die Negativ-Form eines zu profilierenden Fahrzeugreifens darstellen. Zur Profilierung des Reifens weist die Formfläche verschiedene Formteile, wie beispielsweise Formrippen oder Lamellen auf. Die (breiteren) Formrippen sind einstückig aus der Formfläche ausgeformt oder mit dieser, beispielsweise über eine Schweißnaht, verbunden. Die (schmaleren) Lamellen werden, um eine ausreichend feste Verbindung mit der Formfläche herstellen zu können, in eine Ausnehmung in der Formfläche eingesetzt und darin befestigt.

Zur Profilierung eines unprofilierten Fahrzeugreifens wird dieser in die Vulkanisationsform eingebracht. Anschließend wird der Reifen mit Druck beaufschlagt, so dass seine den Formflächen zugewandten Abschnitte - die spätere Lauffläche des Reifens - gegen die Formflächen gedrückt werden. Unter gleichzeitiger Einwirkung von Hitze schmiegen sich diese Abschnitte des Reifens den Formflächen und den darauf angeordneten Formteilen an. Dadurch erhält der Reifen eine Profilierung. Nachdem der Reifen vulkanisiert ist, werden Druck und Hitze zurückgenommen, die Formsegmente der Vulkanisationsform auseinandergeführt und der Reifen der Vulkanisationsform entnommen.

Während Formsegmente früher ausschließlich gegossen wurden, werden sie heutzutage auch aus einem massiven Block herausgefräßt. Als Material für das Formsegment werden üblicherweise Aluminium oder Aluminiumlegierungen verwendet. Für besonders beanspruchte Formen, beispielsweise für die Herstellung von LKM-Reifen, werden teilweise auch Formen aus Stahl eingesetzt.

Ein besonderes Problem bei der Konfektionierung von Formsegmenten für Vulkanisationsformen stellt die Befestigung der Lamellen an der Formfläche dar. Da die Lamellen zu schmal sind, um einstückig aus der Formfläche herausgearbeitet oder mit dieser verschweißt werden zu können, müssen sie in einer Ausnehmung der Formfläche verankert werden. Zur Befestigung der Lamelle in der Ausnehmung wurden diese bisher in der Regel mit Hilfe eines Metallklebers in die Ausnehmung geklebt. Da die Festigkeit der mittels eines Metallklebers erzeugten Verbindung zwischen Lamelle und Wandung der Ausnehmung jedoch nicht besonders hoch ist und die Lamelle bei der Vulkanisation des Reifens stark beansprucht wird, mußte die Ausnehmung bisher verhältnismäßig tief ausgebildet werden, beispielsweise bis zu 4 mm tief oder tiefer.

Da die Lamellen üblicherweise aus Stahlblech bestehen, kommt ein Verschweißen der in die Ausnehmung eingesetzten Lamellen mit einem aus Aluminium oder einer Aluminiumlegierung bestehenden Formsegment nicht in Frage.

Die Breite der Ausnehmung entspricht in der Regel der üblichen Dicke der heutzutage verwendeten Lamellen von etwa 0,6 mm.

Die Ausbildung einer Ausnehmung mit einer Breite von nur 0,6 mm stellt bei einer erforderlichen Tiefe der Ausnehmung von wenigstens 4 mm jedoch ein erhebliches Problem dar. Es wäre vorteilhaft, eine Lamelle in einer Ausnehmung von nur etwa 2 mm Tiefe fest verankern zu können.

Um einen sicheren Sitz einer Lamelle in einem Reifenformsegment ermöglichen zu können, schlägt die DE 197 49 565 C1 vor, ein Reifenformsegment mit einem von der Segmentinnenseite ins Segmentinnere ragenden Schlitz und zumindest einem Hohlraum, in welchen der Schlitz mündet, auszubilden; in den Schlitz ist eine Lamelle einführbar, die mittels einer Rastzunge im Hohlraum einrastbar ist. Ein in einem Hohlraum mündender Schlitz ist jedoch nur schwer und mittels Fräsen überhaupt nicht herstellbar.

Es ist ferner bekannt, eine Vulkanisierform für Luftreifen gemäß dem Oberbegriff des anliegenden Anspruchs 1 vorzusehen, siehe z.B. das Dokument DE 1169651-B.

Der Erfindung liegt die Aufgabe zugrunde, ein Formsegment einer Vulkanisationsform für Fahrzeugreifen mit fest darin verankerten Lamellen zur Verfügung zu stellen, die einfach herzustellen ist.

In ihrer allgemeinsten Ausführungsform schlägt die Erfindung zur Lösung der Aufgabe ein Formsegment einer Vulkanisationsform für Fahrzeugreifen mit den folgenden Merkmalen vor:
- einer Formfläche zur Profilierung des Reifens mit
- wenigstens einer nutförmigen Ausnehmung;
- in wenigstens eine der Ausnehmungen ist eine Lamelle zur Profilierung des Reifens eingesetzt;
- die Lamelle ragt über den Öffnungsmund der Ausnehmung aus der Ausnehmung hinaus;
- die Lamelle weist an ihrem in die Ausnehmung eingesetzten Abschnitt wenigstens ein seitlich abstehendes Teilstück auf,
- dessen dem Öffnungsmund zugewandte Seite beabstandet zum Öffnungsmund verläuft, wobei
- zwischen der dem Öffnungsmund zugewandten Seite des Teilstücks und dem Öffnungsmund ein mit der Seitenwandung der Ausnehmung verbundenes Fixierungselement angeordnet ist.

Die Erfindung geht entsprechend von der Überlegung aus, die Lamelle mittels wenigstens eines seitlich von der Lamelle abstehenden Teilstücks unter einem Fixierungselement in der Ausnehmung zu verankern.

Diese Lösung hat zum einen unter anderem den Vorteil, dass die Ausnehmung einfach, insbesondere ohne Hinterschneidungen oder innere Hohlräuem, aus der Formfläche ausgeformt werden kann. Ein weiterer wesentlicher Vorteil liegt darin, dass eine Stahllamelle nunmehr (mittelbar) über eine besonders stabile und damit bevorzugte Schweißverbindung in der Ausnehmung eines aus Aluminium oder einer Aluminiumlegierung bestehenden Formsegmentes verankert werden kann; denn das Fixierungselement kann aus dem gleichen Material wie das Formsegment bestehen und damit an diesem angeschweißt werden. Mithin kann es für eine ausreichend feste Verankerung der Lamelle in der Ausnehmung genügen, die Ausnehmung nur etwa 1 bis 3 mm tief, also etwa auch 1,5 bis 2,5 mm tief auszubilden.

Die Lamelle kann beispielsweise aus Stahl, Aluminium oder Legierungen daraus bestehen. Sie kann zum Beispiel aus einem Blech gefertigt sein und im wesentlichen ebene und parallel zueinander verlaufenden Hauptoberflächen aufweisen. Sie kann eine beliebige Form aufweisen, also beispielsweise eine in wesentliche rechteckige oder trapezoide Form aufweisen. Es kann auch eine Lamelle vorgesehen sein, bei der die Hauptoberflächen nicht eben sind, also beispielsweise zickzackförmig oder gebogen verlaufen. Die Dicke der Lamelle kann beispielsweise in Bereich zwischen 0,2 und 1 mm liegen, also beispielsweise auch zwischen zwischen 0,4 und 0,8 mm oder zwischen 0,5 und 0,7 mm.

Das Teilstück ist derart an der Lamelle angeordnet, dass es vollständig in der Ausnehmung versenkt ist, wenn die Lamelle in die Ausnehmung eingesetzt ist. Das Teilstück kann einstückig aus der Lamelle ausgeformt sein, beispielsweise aus der Lamelle herausgebogen sein; diese Art der Ausformung bietet sich insbesondere bei einer aus einem Blech gefertigten Lamelle an. Es kann auch vorgesehen sein, das Teilstück an der Lamelle zu befestigen, beispielsweise daran anzuschweißen.

Nach einer Ausführungsform kann vorgesehen sein, dass wenigstens ein Teilstück von wenigstens einer der Schmalseiten der Lamelle seitlich absteht. Unter den "Schmalseiten" werden anmeldungsgemäß die Seiten der Lamelle verstanden, die die schmalen Seitenflächen der Lamelle zwischen den beiden größeren Hauptoberflächen bilden. Da die Schmalseiten der Lamelle der nur geringen Dicke der Lamelle entsprechen können, können die Teilstücke an den Schmalseiten der Lamelle über die gesamte Breite der Schmalseite mit der Lamelle verbunden sein.

Alternativ oder kumulativ kann vorgesehen sein, dass wenigstens ein Teilstück von wenigstens einer der Breitseiten der Lamelle absteht. Unter den "Breitseiten" werden anmeldungsgemäß die beiden Hauptoberflächen der Lamelle verstanden. Dabei kann vorgesehen sein, dass an den Breitseiten jeweils ein oder mehrere Teilstücke nebeneinander angeordnet sein können. Bei nur einem Teilstück an einer der Breitseiten kann sich dieses über die gesamte Breite der Lamelle erstrecken.

Die dem Öffnungsmund zugewandte Seite eines jeden Teilstücks verläuft beabstandet zum Öffnungsmund der Ausnehmung. Unter dem "Öffnungsmund" der Ausnehmung wird anmeldungsgemäß eine gedachte, geometrische Fläche verstanden, die sich zwischen den Oberkanten der Ausnehmung, an denen diese in die Formfläche übergeht, erstreckt.

Es kann vorgesehen sein, dass die dem Öffnungsmund zugewandte Seite wenigstens eines Teilstücks im wesentlichen parallel zum Öffnungsmund verläuft.

Zur Verankerung der Lamelle in der Ausnehmung ist zwischen der dem Öffnungsmund zugewandten Seite des Teilstücks und dem Öffnungsmund ein mit der Seitenwandung der Ausnehmung verbundenes Fixierungselement angeordnet. Verfahrensmäßig wird dabei zunächst die Lamelle in die Ausnehmung eingesetzt; anschließend werden Fixierungselemente über jedem Teilstück mit der Seitenwandung der Ausnehmung, beispielsweiese mittels Schweißen, verbunden.

Um einen festen Sitz der Lamelle in der Ausnehmung zu erhalten, kann insbesondere vorgesehen sein, dass die Außenflächen des Abschnitts der Lamelle, der in die Ausnehmung eingesetzt ist, mit der Wandung der Ausnehmung korrespondierenden, so dass die Lamelle paßgenau in die Ausnehmung eingesetzt werden kann. Das oder die Teilstücke reichen gleichzeitig jeweils bis an die Seitenwandung der Ausnehmung heran. Wird wenigstens ein Teilstück der Lamelle anschließend mittels eines Fixierungselementes überdeckt, ist die Lamelle fest in der Ausnehmung verankert. Die vorgenannte Ausführungsform kann beispielsweise derart vorgesehen sein, dass die Seitenwandungen der Ausnehmung im wesentlichen senkrecht zur Formfläche verlaufen und die Grundfläche der Ausnehmung parallel zum Öffnungsmund der Ausnehmung verläuft. Entsprechend weist der in die Ausnehmung eingesetzte Abschnitt der Lamelle im wesentlichen parallele, ebene Breitseiten und eine auf der Grundfläche der Ausnehmung aufliegende untere Schmalseite sowie an den schmaleren Seitenwandungen der Ausnehmung aufliegende seitliche Schmalseiten auf; bei der Breitseite oder Schmalseite, die ein Teilstück aufweist, reicht das Teilstück bis an die der betreffenden Seite der Lamelle zugewandte Seitenwandung der Ausnehmung heran.

Die dem jeweiligen Teilstück zugewandte Seite eines Fixierungselementes kann unmittelbar an der Oberseite des Teilstücks angeordnet sein, um ein Verrutschen der Lamelle zu verhindern. Das Fixierungselement kann sich dabei über die gesamte Länge zwischen der Oberseite des Teilstücks und dem Öffnungsmund erstrecken.

Die dem Teilstück abgewandte Seite des Fixierungselementes kann zumindest abschnittsweise in der Ebene des Öffnungsmundes verlaufen. Dadurch geht das Fixierungselement harmonisch und eben in die Formfläche über.

Das Fixierungselement kann beispielsweise ein Draht, etwa aus Aluminium, Stahl oder Legierungen daraus sein. Wie oben bereits angesprochen, kann bei Verwendung eines Drahtes aus einem Aluminiummaterial damit erstmalig eine Stahllamelle in einem Formsegment aus einem dem Draht entsprechenden Aluminiummaterial mittels einer Schweißverbindung gehalten werden.

Das Formsegment kann beispielsweise aus Aluminium, Stahl oder Legierungen daraus bestehen.

Die Formfläche des Formsegmentes kann die übliche konkave Form aufweisen. Zur Profilierung des Reifens kann sie neben der wenigstens einen Lamelle weitere Formteile, wie beispielsweise Formrippen aufweisen.

Die Ausnehmung zur Aufnahme der Lamelle kann mittels Fräsen oder mittels Laser aus der Formfläche herausgearbeitet werden. Bei einem Formsegment aus Stahl kann die Ausnehmung auch mittels Senkerodieren in die Formfläche eingebracht werden.

Es ist auch möglich, das Formsegment mittels einem Laser-Sinter-Verfahren herzustellen. Dabei wird durch Sintern von Schichten eines Metallpulvers mittels Laserstrahlung das Segment schichtweise aufgebaut. Auch kann das Formsegment durch Laser-Auftragsschweißen, bei dem im Laserstrahl geschmolzenes pulver in Nähten aufgetragen wird, erstellt werden. Bei den beiden vorgenannten Herstellungsmethoden wird die Ausnehmung bereits bei der Herstellung des Formsegmentes zusammen mit diesem erstellt.

Die Ausnehmung kann grundsätzlich eine beliebige, insbesondere jedoch eine nutförmige Form aufweisen. Es kann vorgesehen sein, dass ihre Wandungen derart mit dem in sie eingesetzten Abschnitt der Lamelle korrespondieren, dass die Lamelle paßgenau in der Ausnehmung zu liegen kommt. Insbesondere bei Verwendung von Lamellen aus einem Blech kann die Lamelle nutartig ausgebildet sein. Die nutartige Ausnehmung kann wenigstens einen abknickenden Abschnitt aufweisen. Diese abknickenden Abschnitte können zur Aufnahmen von an den Schmalseiten der Lamelle angeordneten Teilstücken dienen. Der Winkel, unter dem der abknickende Abschnitt der nutartigen Ausnehmung aus der Längsachse der Nut abknickt, kann beispielsweise zwischen 10° und 90°, also auch zwischen 20° und 60° oder 30° und 50° liegen. Ein Ausführungsbeispiel mit einem Abknickwinkel von 40° wird in der nachfolgenden Figurenbeschreibung beispielhaft erläutert.

Nach einem Ausführungsbeispiel kann vorgesehen sein, dass eine der Seitenwandungen der Ausnehmung eine Vertiefung aufweist. Die Lamelle weist dabei auf der dieser Vertiefung zugewandten Seitenfläche einen in die Vertiefung einführbaren Vorsprung und auf der gegenüberliegenden Seitenfläche ein Teilstück auf. Die Lamelle wird bei dieser Ausführungsform zunächst derart in die Ausnehmung eingesetzt, dass der Vorsprung in die Vertiefung eingeführt wird; anschließend wird das Teilstück vom Fixierungselement überdeckt.

Weitere Merkmale der Erfindung ergeben sich aus den Unteransprüchen sowie den sonstigen Anmeldungsunterlagen.

Grundsätzlich können sämtliche der in den Anmeldungsunterlagen offenbarten Merkmale beliebig kombiniert werden.

Ein stark schematisiertes Ausführungsbeispiel soll anhand der nachfolgenden Figurenbeschreibung näher erläutert werden.

Dabei zeigen
- Fig. 1: einen Ausschnitt aus einer seitlichen Schnittansicht eines Formsegmentes,
- Fig. 2: den vergrößerten Ausschnitt Z aus Fig. 1 und
- Fig. 3: den Ausschnitt nach Fig. 1 von oben, das heißt bei Aufsicht auf die Formfläche.

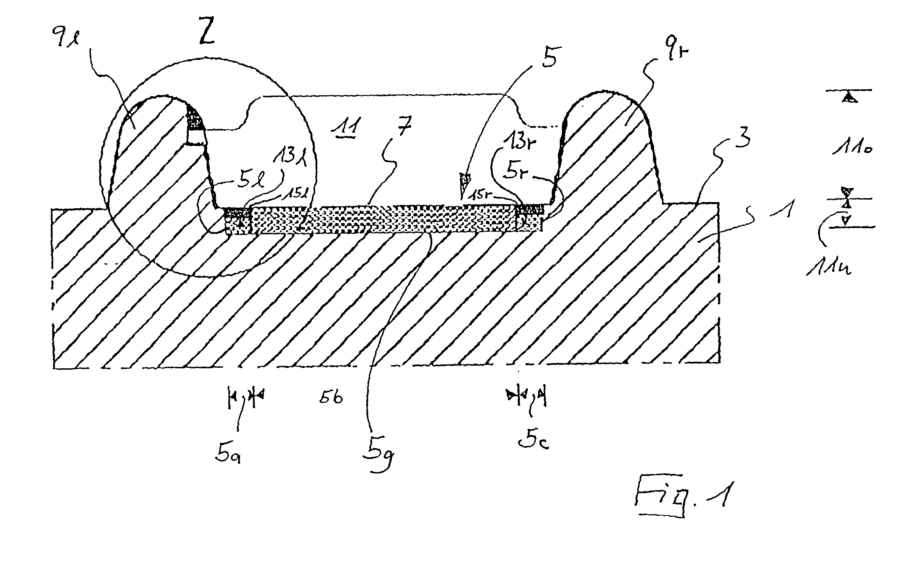

Fig. 1 zeigt einen Ausschnitt aus einer seitlichen Schnittansicht eines Formsegmentes 1 aus einer Aluminiumlegierung. Der Schnitt ist senkrecht zur Formfläche 3 des Formsegmentes 1 gezogen; da in Fig. 1 nur ein kleiner Ausschnitt aus dem Formsegment 1 und damit nur ein kleiner Abschnitt der Formfläche 3 dargestellt ist, ist die Formfläche 3 eben dargestellt, obgleich sie in Wirklichkeit leicht konkav gewölbt ist.

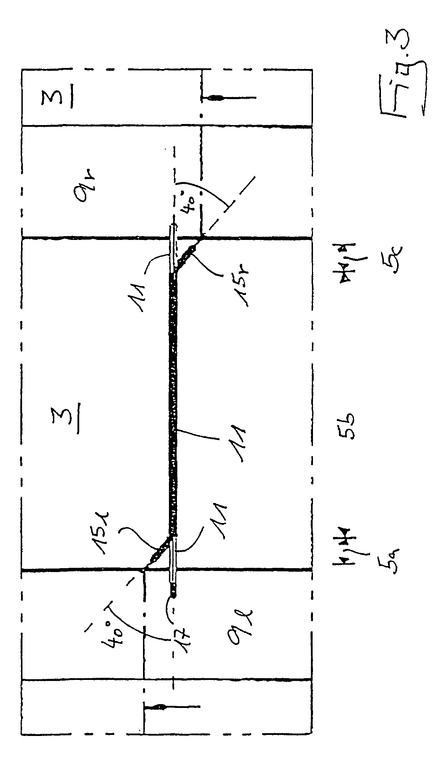

Die Formfläche 3 weist eine nutförmige Ausnehmung 5 auf. Die schmaleren Seitenwandungen 51 an der linken sowie 5r an der rechten Flanke der Ausnehmung 5 fallen mit Neigung zur Grundfläche 5g der Ausnehmung 5 ab. Die beiden Seitenwandungen an den breiteren Flanken der Ausnehmung 5 verlaufen zwischen diesen Seitenwandungen 51, 5r jeweils parallel zueinander und in ihrem mittleren Abschnitt 5b parallel zur Zeichenebene. In ihrem linken Abschnitt 5a verlaufen sie in einem Winkel von 40° von der Zeichenebene weg und in ihrem rechten Abschnitt 5b in einem Winkel von 40° auf die Zeichenebene zu (s. Fig. 3). Zwischen den Oberkanten der Ausnehmung 5, an denen diese in die Formfläche 3 übergeht - in Fig. 1 sind nur die Oberkanten der Seitenwandungen 51 und 5r zu erkennen - erstreckt sich die gedachte, geometrische Fläche des Öffnungsmundes 7 der Ausnehmung 5.

Senkrecht zur Zeichenebene und parallel zum Öffnungsmund 7 verläuft die Grundfläche 5g der Ausnehmung 5.

Unmittelbar benachbart zur Ausnehmung 5 ist links von ihr eine Formrippe 91 und rechts von ihr eine Formrippe 9r jeweils auf der Formfläche 3 angeordnet. Die Formrippen 91, 9r sind einstückig aus der Formfläche 3 ausgebildet und verlaufen senkrecht zur Zeichenebene.

Mit ihrem unteren Abschnitt 11u ist eine Lamelle 11 aus einem Stahlblech in die Ausnehmung 5 eingesetzt. Der obere Abschnitt 11o ragt über den Öffnungsmund 7 der Ausnehmung 5 aus dieser heraus. Der mittlere Bereich des Abschnitts 11u ist leicht erhaben. Der obere Rand dieses mittleren Bereichs verläuft parallel zum Öffnungsmund 7 und liegt in einer Ebene mit den von der Formfläche 3 abgewandten Graten der Formrippen 91, 9r. Der Abschnitt 11u sitzt paßgenau in der Ausnehmung 5. Der im mittleren Abschnitt 5b einsitzende Bereich des Abschnitts 11u füllt diesen Abschnitt 5b vollkommen aus. Er ist, in Fig. 1 dargestellt durch eine Schraffur, über einen Metallkleber mit den Seitenwandungen der breiteren Flanken der Ausnehmung 5 verklebt.

Seitlich stehen zwei Teilstücke 131, 13r vom Abschnitt 11u der Lamelle 11 ab. Im Abschnitt 5a sitzt das linke Teilstück 131 und im Abschnitt 5c das rechte Teilstücke 13r ein. Die Teilstücke 131, 13r sind einstückig aus dem Abschnitt 11u der Lamelle ausgebildet. Das linke Teilstück 131 ist um 40° von der Zeicheneben weg und das rechte Teilstück 13r um 40° auf die Zeichenebene zu abgeknickt; die Teilstücke folgen damit dem Verlauf der abknickenden Abschnitte 5a, 5c der Ausnehmung 5. Die Teilstücke 131, 13r füllen jeweils etwas mehr als die untere Hälfte der Abschnitte 5a, 5b aus. Sie sind, wiederum dargestellt durch eine Schraffur, mit den Seitenwandungen der Ausnehmung 5 über einen Metallkleber verklebt.

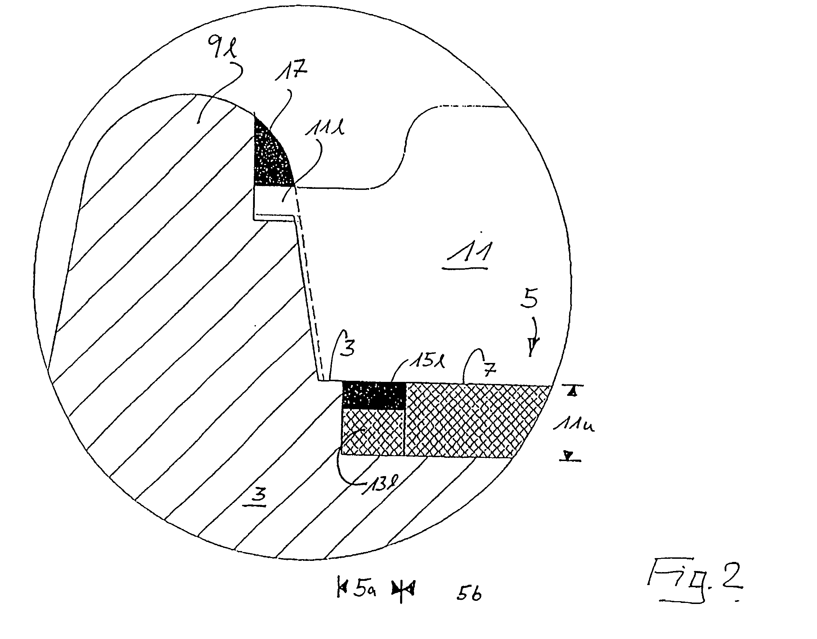

Der in Fig. 1 mit.Z bezeichnete Bereich ist in Fig. 2 vergrößert dargestellt.

Der obere Bereich des Abschnitts 5a, der nicht vom Teilstück 131 ausgefüllt wird, ist von einem linken Fixierungselement 151 ausgefüllt. Es nimmt den gesamten Raum zwischen der dem Öffnungsmund 7 zugewandten Seite des Teilstücks 131 und dem Öffnungsmund 7 ein. Das Fixierungselement 151 besteht aus einer dem Formsegment entsprechenden Aluminiumlegierung; es ist mit der Seitenwandung der Ausnehmung 5 verschweißt.

Der linke Rand der Lamelle 11 ist an die der Ausnehmung 5 zugewandte Flanke der Formrippe 91 angeschmiegt. An ihrem oberen Ende weist der linke Rand der Lamelle 11 einen nach links abstehenden Steg 111 auf, der paßgenau in einer Aussparung der Flanke der Formrippe 91 einliegt. Der gesamte Raum der Aussparung oberhalb des Steges 111 wird von einem in die Aussparung eingeschweißten Aluminiumelement 17 eingenommen, so dass der Steg 111 fest mit der Aussparung verbunden ist.

Analog dem linken Teilstück 131 ist das rechte Teilstück 13r durch ein rechtes Fixierungselement 15r in der Ausnehmung 5 überdeckt.

Fig. 3 zeigt die geringe Dicke der Lamelle 11. Der von der Lamelle 11 eingenommene mittlerer Abschnitt 5b der Ausnehmung ist schwarz dargestellt. Die Abschnitte 5a, 5c knicken, wie oben ausgeführt, in verschiedene Richtungen vom mittleren Abschnitt 5b ab, so dass die Ausnehmung 5 insgesamt den Verlauf einer S-Rune aufweist.

Das Verfahren zur Erstellung des dargestellten Formsegmentes ist wie folgt.

Die Rohform des Formsegmentes 3, einschließlich der Formrippen 91, 9r, wird mittels Fräsen aus einem massiven Block einer Aluminiumlegierung herausgearbeitet. Anschließend wird die nutförmige Ausnehmung 5 mittels Laser in die Rohform hereingearbeitet. Nunmehr wird die Lamelle 11 mit ihrem unteren Abschnitt 11u in die Ausnehmung 5, in die zuvor Metallkleber eingebracht worden ist, eingesetzt. In den innerhalb der Abschnitte 5a, 5c freibleibenden Raum oberhalb der Teilstücke 131, 13r wird jeweils ein Draht eingelegt, der in seiner Zusammensetzung dem Material der Rohform entspricht. Die Drähte werden mit der Seitenwandung der Ausnehmung 5 verschweißt, so dass die Lamelle 11 fest in der Ausnehmung 5 verankert ist.

## Patentansprüche

1. Formsegment (1) einer Vulkanisationsform für Fahrzeugreifen mit folgenden Merkmalen:
a) einer Formfläche (3) zur Profilierung des Reifens mit
b) wenigstens einer nutförmigen Ausnehmung (5);
c) in wenigstens eine der Ausnehmungen (5) ist eine Lamelle (11) zur Profilierung des Reifens eingesetzt;
d) die Lamelle (11) ragt über den Öffnungsmund (7) der Ausnehmung (5) aus der Ausnehmung hinaus;
**dadurch gekennzeichnet, daß**
die Lamelle (11) an ihrem in die Ausnehmung (5) eingesetzten Abschnitt wenigstens ein seitlich abstehendes Teilstück (13 l)(13 r) aufweist, dessen dem Öffnungsmund (7) zugewandte Seite beabstandet zum Öffnungsmund (7) verläuft, und daß
zwischen der dem Öffnungsmund zugewandten Seite des Teilstücks (13l)(13r) und dem Öffnungsmund (7) ein mit der Seitenwandung der Ausnehmung (5) verbundenes Fixierungselement (15l)(15r) angeordnet ist.

2. Formsegment nach Anspruch 1 mit einer im wesentlichen konkav gewölbten Formfläche.

3. Formsegment nach Anspruch 1, bei dem die Formfläche Formteile zur Profilierung des Reifens aufweist.

4. Formsegment nach Anspruch 1 mit wenigstens einem endseitig abknickenden Abschnitt der Ausnehmung.

5. Formsegment nach Anspruch 1 mit im wesentlichen senkrecht zur Formfläche verlaufenden Seitenwandungen der Ausnehmung.

6. Formsegment nach Anspruch 1 mit einem von wenigstens einer der Breitseiten der Lamelle abstehenden Teilstück.

7. Formsegment nach Anspruch 1 mit einem von wenigstens einer der Schmalseiten der Lamelle abstehenden Teilstück.

8. Formsegment nach Anspruch 1, bei dem die dem Öffnungsmund zugewandte Seite des Teilstücks im wesentlichen parallel zum Öffnungsmund verläuft.

9. Formsegment nach Anspruch 1, bei dem Lamelle und Teilstück einstückig ausgebildet sind.

10. Formsegment nach Anspruch 9, bei dem das Teilstück aus der Lamelle herausgebogen ist.

11. Formsegment nach Anspruch 1, bei dem das Fixierungselement mit der Seitenwandung der Ausnehmung verschweißt ist.

12. Formsegment nach Anspruch 1, bei dem sich das Fixierungselement über die Länge zwischen der Oberseite des Teilstücks und dem Öffnungsmund erstreckt.

13. Formsegment nach Anspruch 1, bei dem die dem Teilstück abgewandte Seite des Fixierungselementes zumindest abschnittsweise in der Ebene des Öffnungsmundes verläuft.

14. Formsegment nach Anspruch 1, wobei das Fixierungselement aus einem mit dem Formsegment verschweißbaren Material besteht.

15. Formsegment nach Anspruch 1 mit einem Fixierungselement aus Draht.

## Claims

1. A mould segment (1) of a vulcanisation mould for vehicle tyres with the following features:
a) A mould surface (3) for creating the profile tread of the tyre with
b) at least one groove-shaped cut-out (5);
c) A lamella (11) for creating the profile tread of the tyre is inserted into at least one of the cutouts (5);
d) The lamella (11) projects out of the cut-out, over the opening mouth (7) of the cut-out (5), **characterized in that**
e) The lamella (11) exhibits in its section inserted into the cut-out (5) at least one laterally projecting part piece (131, 13r),
f) Of which the side turned towards the opening mouth (7) runs at a distance from the opening mouth (7), and that
g) a fixing element (151, 15r), connected to the side wall of the cut-out (5), is arranged between the side of the part piece (131, 13r) turned towards the opening mouth and the opening mouth (7) itself.

2. The mould segment according to Claim 1 with a mould surface which is essentially curved in concave fashion.

3. The mould segment according to Claim 1, in which the mould surface exhibits mould parts for creating the profile tread of the tyre.

4. The mould segment according to Claim 1, with at least one section of the cut-out folded on the end side.

5. The mould segment according to Claim 1, with side walls of the cut-out running essentially perpendicular to the mould surface.

6. The mould segment according to Claim 1, with a part piece projecting from at least one of the broad sides of the lamella.

7. The mould segment according to Claim 1, with a part piece projecting from at least one of the narrow sides of the lamella.

8. The mould segment according to Claim 1, with which the side of the part piece turned towards the opening mouth runs essentially parallel to the opening mouth.

9. The mould segment according to Claim 1, with which the lamella and part piece are formed monolithically.

10. The mould segment according to Claim 9, with which the part piece is curved out of the lamella.

11. The mould segment according to Claim 1, with which the fixing element is welded to the side wall of the cut-out.

12. The mould segment according to Claim 1, with which the fixing element extends over the length between the upper side of the part piece and the opening mouth.

13. The mould segment according to Claim 1, with which the side of the fixing element turned away from the part piece runs at least in sections in the plane of the opening mouth.

14. The mould segment according to Claim 1, in which the fixing element is made of a material which is capable of being welded with the mould segment.

15. The mould segment according to Claim 1 with a fixing element made of wire.

## Revendications

1. Partie de moule (1) d'une presse de vulcanisation pour pneumatiques, avec les caractéristiques suivantes :
a) une surface de moulage (3) pour le profilage du pneumatique, comportant
b) au moins un évidement (5) en forme de rainure ;
c) une lamelle (11) pour le profilage du pneumatique est introduite dans au moins l'un des évidements (5) ;
d) la lamelle (11) s'avance en saillie hors de l'évidement (5) au-delà de la bouche d'ouverture (7) de l'évidement (5),
**caractérisée**
**en ce que** la lamelle (11), sur la partie introduite dans l'évidement (5), comporte au moins un élément partiel (131, 13r), qui forme une saillie latérale et dont la face orientée vers la bouche d'ouverture (7) s'étend à distance de la bouche d'ouverture (7),
et **en ce qu'**un élément de fixation (151, 15r) , assemblé à la paroi latérale de l'évidement (5), est agencé entre la face de l'élément partiel (131, 13r) orientée vers la bouche d'ouverture (7) et la bouche d'ouverture (7).

2. Partie de moule selon la revendication 1 avec une surface de moulage à courbure sensiblement concave.

3. Partie de moule selon la revendication 1, dans lequel la surface de moulage comporte des éléments de moulage pour le profilage du pneumatique.

4. Partie de moule selon la revendication 1 avec au moins une partie de l'évidement qui forme un décrochement du côté de l'extrémité.

5. Partie de moule selon la revendication 1 avec des parois latérales de l'évidement qui sont sensiblement perpendiculaires à la surface de moulage.

6. Partie de moule selon la revendication 1 avec un élément partiel qui s'avance en saillie à partir d'au moins un des côtés larges de la lamelle.

7. Partie de moule selon la revendication 1 avec un élément partiel qui s'avance en saillie à partir d'au moins un des petits côtés de la lamelle.

8. Partie de moule selon la revendication 1, dans laquelle la face de l'élément partiel, orientée vers la bouche d'ouverture, est sensiblement parallèle à la bouche d'ouverture.

9. Partie de moule selon la revendication 1, dans laquelle la lamelle et l'élément partiel sont réalisés d'un seul tenant.

10. Partie de moule selon la revendication 9, dans laquelle l'élément partiel est coudé hors de la lamelle.

11. Partie de moule selon la revendication 1, dans laquelle l'élément de fixation est soudé contre la paroi latérale de l'évidement.

12. Partie de moule selon la revendication 1, dans laquelle l'élément de fixation s'étend sur la longueur entre la face supérieure de l'élément partiel et la bouche d'ouverture.

13. Partie de moule selon la revendication 1, dans laquelle la face de l'élément de fixation, opposée à l'élément partiel, s'étend au moins par tronçons dans le plan de la bouche d'ouverture.

14. Partie de moule selon la revendication 1, dans laquelle l'élément de fixation est réalisé dans un matériau soudable contre le segment de moule.

15. Partie de moule selon la revendication 1 avec un élément de fixation par un fil.
